# EUROPÄISCHE PATENTSCHRIFT

(11) **EP 4 017 674 B1**
(45) Veröffentlichungstag und Bekanntmachung des Hinweises auf die Patenterteilung: **22.11.2023**
(21) Anmeldenummer: 20739602.9
(22) Anmeldetag: 06.07.2020
(51) Int. Cl.: B23K 26/046, B23K 26/08, B23K 26/38, B23K 101/18

(54) **VERFAHREN ZUM BRENNSCHNEIDEN MITTELS EINES LASERSTRAHLS**
METHOD FOR FLAME CUTTING BY MEANS OF A LASER BEAM
PROCÉDÉ D'OXYCOUPAGE AU MOYEN D'UN FAISCEAU LASER

(30) Priorität: 19.08.2019 DE 102019212360
(43) Veröffentlichungstag der Anmeldung: 29.06.2022
(73) Patentinhaber: TRUMPF Werkzeugmaschinen SE + Co. KG, 71254 Ditzingen (DE)
(72) Erfinder: KAISER, Tobias, 71277 Rutesheim (DE); KRAUS, Christoph, 71272 Renningen (DE)
(74) Vertreter: Trumpf Patentabteilung
(86) Internationale Anmeldenummer: PCT/EP2020/069043
(87) Internationale Veröffentlichungsnummer: WO 2021/032355

(56) Entgegenhaltungen:
- DE-B3-102016 220 807
- US-A1- 2007 119 834
- US-A1- 2012 031 883

## Beschreibung

### Hintergrund der Erfindung

Die Erfindung betrifft ein Verfahren zum Brennschneiden eines insbesondere plattenförmigen Werkstücks mit einer Dicke von mindestens 10 mm mittels eines Laserstrahls mit einer Leistung von mehr als 10 kW und mit Sauerstoff als Schneidgas. Bei einem solchen Verfahren zum Brennschneiden wird der Laserstrahl typischerweise entlang einer (in der Regel veränderlichen) Schneidrichtung relativ zum Werkstück bewegt, wobei sich entgegen der Schneidrichtung ein Schnittspalt in dem Werkstück ausbildet.

Zum Schneiden eines Werkstücks mit einer vergleichsweise großen Dicke ist in der Regel ein vergleichsweise großer Fokusdurchmesser des Bearbeitungslaserstrahls erwünscht. Der Schnittspalt sollte so breit sein, dass beim Schneiden entstehendes verflüssigtes Werkstückmaterial und/oder Schlacke ausgeblasen werden kann. Hingegen ist bei der Bearbeitung von Werkstücken mit vergleichsweise geringen Dicken, insbesondere zum schnellen Laserschneiden, ein vergleichsweise kleiner Fokusdurchmesser erwünscht.

Aus WO 2011 124671 A1 oder WO 2014 060091 A1 ist es bekannt, einen oder mehrere Festkörper-Laserstrahlen zwischen verschiedenen Kernen einer Mehrfachkernfaser zu schalten, um am Faserausgang einen Laserstrahl mit veränderbarer Laserstrahlcharakteristik zu erhalten, der mittels eines nachfolgenden Schneidkopfes mit variablem Fokusdurchmesser auf das zu schneidende Werkstück fokussiert werden kann. Beim Schneiden mit sehr hoher Laserleistung von beispielsweise > 10 kW sind mit den beschriebenen Systemen sowohl dicke als auch dünne Werkstücke mit hoher Qualität schneidbar. Allerdings lässt sich in diesem Leistungsbereich durch eine Steigerung der Laserleistung nicht mehr eine entsprechende Steigerung der Schneidgeschwindigkeit, also des Vorschubs, erreichen.

In der WO 2009 007708 A2 werden bevorzugte Prozessparameter für das Brennschneiden von Blechen mit Sauerstoff als Schneidgas angegeben. Beispielsweise sollte die Fokusposition des Laserstrahls oberhalb der Blechoberfläche angeordnet sein, insbesondere in einem Abstand von ca. 4-5 mm von der Blechoberfläche. Ein Abstand zwischen der Blechoberfläche und einer Bearbeitungsdüse liegt zwischen ca. 1 mm und ca. 2 mm.

Die US 2007/119834 A1 offenbart ein Verfahren, um die Schnittgeschwindigkeit beim Laserschneiden von dicken Werkstücken zu erhöhen, allerdings geschieht dies nicht über eine spezielle Einstellung der Fokusposition. Weiterhin wird der Abstand der Schneiddüse von der Werkstückoberfläche nicht berücksichtigt.

### Aufgabe der Erfindung

Aufgabe der vorliegenden Erfindung ist es, ein Verfahren zum Brennschneiden mittels eines Laserstrahls mit einer Laserleistung von mehr als 10 kW anzugeben, bei dem eine Steigerung der Schneidgeschwindigkeit erreicht werden kann. Diese Aufgabe wird gelöst durch ein Verfahren der eingangs genannten Art, bei dem eine Fokusposition in Strahlrichtung des Laserstrahls sich in dem Werkstück in einer Tiefe befindet bzw. positioniert wird, die größer ist als die Hälfte der Dicke des Werkstücks und bei dem der Laserstrahl gemeinsam mit dem Schneidgas aus einer Düsenöffnung einer Schneidgasdüse austritt, wobei ein Abstand einer werkstückseitigen Düsenstirnfläche von der Werkstückoberfläche mindestens 2 mm, vorzugsweise mindestens 3 mm, besonders bevorzugt mindestens 5 mm beträgt.

Mit anderen Worten weist die Fokusposition des Laserstrahls in Bezug auf die Werkstückoberfläche, an welcher der Laserstahl in das Werkstück eintritt, einen Abstand auf, der größer ist als die halbe Dicke des Werkstücks. Trifft der Laserstrahl wie allgemein üblich an der Oberseite auf das Werkstück auf, so befindet sich die Fokusposition, d.h. die Position der Strahltaille des Laserstrahls, unterhalb der Werkstückmitte. Die Fokusposition liegt typischerweise nicht unterhalb des Werkstücks, d.h. der Laserstrahl wird an einer Fokusposition fokussiert, die zwischen der halben Werkstückdicke und der ganzen Werkstückdicke liegt. Je größer die Dicke des Werkstücks ist, desto größer ist auch der Abstand der Fokusposition von der Werkstückoberfläche.

Eine solche Einstellung der Fokusposition weicht erheblich von den bisher verwendeten Einstellungen ab, bei welcher die Fokusposition an der Oberseite des Werkstücks, geringfügig unterhalb der Oberseite des Werkstücks oder oberhalb des Werkstücks (vgl. die WO 2009 007708 A2) angeordnet ist.

Durch die erfindungsgemäße Art der Fokussierung befindet sich die Fokuslage sehr tief im Werkstück. Diese extrem tiefe Fokuslage führt zu einer Defokussierung des Laserstrahls an der Werkstückoberfläche und damit zu einer Reduzierung der Leistungsdichte an der Werkstückoberfläche. Damit einher geht eine Verbreiterung des Schnittspaltes. Auf diese Weise kann überraschend bei einer Steigerung der Laserleistung im Bereich zwischen 10 kW und 20 kW eine deutliche kontinuierliche Steigerung der Schneidgeschwindigkeit bei gleichzeitig guter Schnittkantenqualität und Prozesssicherheit erreicht werden. Zum Beispiel führte bei bisher üblichen Schneidparametern beim Brennschneiden von Werkstücken hoher Dicke eine um 50 % höhere Laserleistung zu weniger als 20 % Vorschubsteigerung. Mit dem erfindungsgemäßen Verfahren kann bei einer Leistungssteigerung um 50 % hingegen auch überraschenderweise eine Vorschubsteigerung von 50 % erreicht werden.

Die Erfinder haben erkannt, dass es für die Durchführung des Verfahrens zudem günstig ist, wenn ein sehr großer Abstand zwischen der Schneidgasdüse, genauer gesagt der Düsenstirnfläche, und der Werkstückoberfläche eingestellt wird, da auf diese Weise die gewünschte Wirkung, nämlich die Steigerung der Vorschubgeschwindigkeit mit der Steigerung der Leistung des Laserstrahls, unterstützt wird. Die Wahl eines großen Abstands zwischen der Schneidgasdüse und der Werkstückoberfläche steht ebenfalls im Gegensatz zur Lehre der WO 2009 007708 A2, in der angegeben ist, dass ein Abstand zwischen der Düse und der Werkstückoberseite zwischen 1 mm und 2 mm gewählt werden soll.

Bei einer weiteren Variante wird der Laserstrahl in einem Laserstrahlerzeuger erzeugt, der über eine Lichtleitfaser mit einem Schneidkopf verbunden ist, an dem die Schneidgasdüse angebracht ist, wobei die Lichtleitfaser als Einfachkernfaser oder als Mehrfachkernfaser ausgebildet ist. Die Lichtleitfaser kann wie in der WO 2011 124671 A1 beschrieben ausgebildet sein, d.h. diese kann als Mehrfachclad-Faser mit einem inneren Faserkern und mit mindestens einem Ringkern ausgebildet sein. Die Mehrfachkernfaser kann auch wie in der WO 2014 060091 A1 beschrieben ist ausgebildet sein. Bei der Verwendung der erfindungsgemäßen Prozessparameter ist die Verwendung einer Mehrfachkernfaser möglich, aber nicht mehr unbedingt notwendig, vielmehr kann die Lichtleitfaser nur einen einzigen Kern aufweisen, wie dies bei einfachen bzw. herkömmlichen Lichtleitfasern üblich ist.

Bei einer weiteren Variante weist die Einfachkernfaser einen Kerndurchmesser zwischen 50 µm und 150 µm auf. Ein Kerndurchmesser in dieser Größenordnung hat sich für das Brennschneiden als vorteilhaft erwiesen. Der aus der Lichtleitfaser austretende Laserstrahl wird typischerweise von einer in dem Schneidkopf angeordneten Fokussiereinrichtung, beispielsweise in Form einer Fokussieroptik, z.B. einer Fokussierlinse, auf das Werkstück fokussiert.

Bei einer Variante weist der Laserstrahl auf der Werkstückoberseite ein gaußförmiges Intensitätsprofil auf. Ein solches Intensitätsprofil hat sich für das Brennschneiden mit den oben beschriebenen Parametern als günstig erwiesen. Das gaußförmige Intensitätsprofil liegt typischerweise beim Austritt des Laserstrahls aus einer Einfachkernfaser vor, so dass bei der Verwendung einer solchen Lichtleitfaser keine zusätzlichen optischen Elemente erforderlich sind, um das gaußförmige Intensitätsprofil zu erzeugen.

Bei einer weiteren Variante beträgt der Fokusdurchmesser des Laserstrahls an der Fokusposition zwischen 150 µm und 300 µm, bevorzugt 200 µm. Ein solcher Fokusdurchmesser hat sich für das Brennschneiden von dicken plattenförmigen Werkstücken, insbesondere von Blechen, als günstig herausgestellt, wenn die Fokusposition sich in der unteren Hälfte des Werkstücks befindet.

Bei einer weiteren Variante wird der Laserstrahl mittels eines Festkörperlasers oder mittels eines Diodenlasers als Laserstrahlerzeuger erzeugt. Festkörper- und Diodenlaser haben sich als günstig für schnelle Schneiden vor allem dünner Werkstücke erwiesen und weisen eine bessere Energieeffizienz auf als CO2-Laser. Durch das erfindungsgemäße Verfahren wird das Anwendungsgebiet der Festkörper- bzw. Diodenlaser sinnvoll auf Brennschneidprozesse erweitert.

Bei einer weiteren Variante beträgt der Überdruck (Kesseldruck) des Schneidgases (Sauerstoff) vor dem Austritt aus der Düsenöffnung zwischen 0,4 und 1 bar. Durch die zur Verfügung stehende höhere Laserleistung von mehr als 10 kW wird weniger Sauerstoff benötigt, um einen ausgeglichenen exothermen Verbrennungsprozess zu realisieren. Ein zu hohes Sauerstoffvolumen würde zu einem unkontrollierten Ausbrennen des Schnittspaltes führen.

Die der Erfindung zugrundeliegende Aufgabe wird ferner durch eine Laserschneidmaschine nach Anspruch 8 gelöst, die zur Durchführung des Verfahrens nach einer der oben beschriebenen Varianten eingerichtet ist.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnungen

Es zeigen:
**Fig. 1** einen Längsschnitt durch eine Schneidgasdüse und durch ein plattenförmiges Werkstück beim Brennschneiden mittels eines Laserstrahls;
**Fig. 2** einen Graphen einer Fokusposition des Laserstrahls in Abhängigkeit von einer Werkstückdicke;
**Fig. 3** eine Laserschneidmaschine zum Durchführen eines Verfahrens zum Brennschneiden.

In der folgenden Beschreibung der Figuren werden für gleiche bzw. funktionsgleiche Bauteile identische Bezugszeichen verwendet.

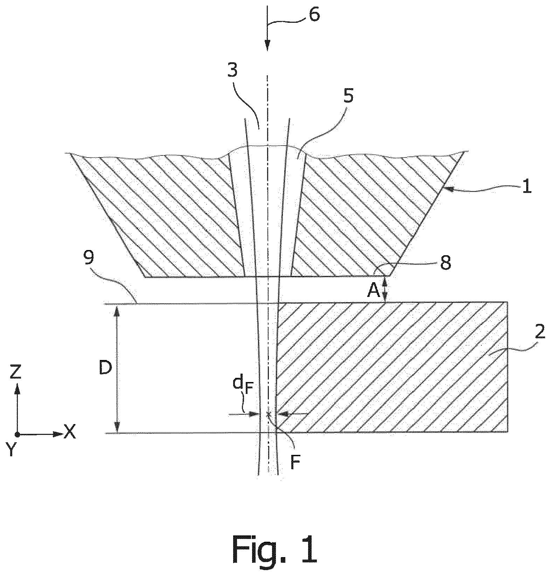

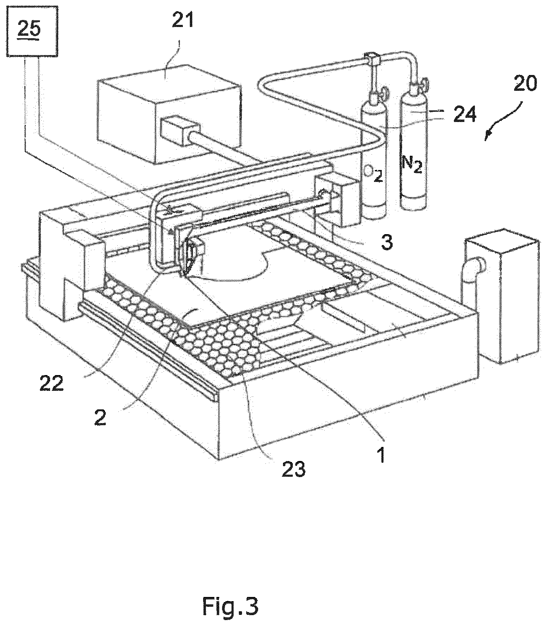

Figur 1 zeigt eine Schneidgasdüse **1** zum Laserschneiden eines plattenförmigen metallischen Werkstücks **2** (eines Blechs) mit einer Dicke **D** von mindestens 10 mm mittels eines Laserstrahls **3** und eines Schneidgases **24** (vgl. Fig. 3). Das Schneidgas 24 und der Laserstrahl 3 treten beide gemeinsam aus einer Düsenöffnung **5** der Schneidgasdüse 1 aus. Der Laserstrahl 3 weist eine Strahlrichtung **6** auf, die entlang der negativen Z-Richtung eines XYZ-Koordinatensystems verläuft. Bei dem Laserschneidprozess handelt es sich um einen Brennschneidprozess, bei dem als Schneidgas 24 Sauerstoff eingesetzt wird.

Die Schneidgasdüse 1 wird über das Werkstück 2 in Schneidrichtung **7** bewegt, die der X-Richtung des XYZ-Koordinatensystems entspricht, um im Werkstück 2 einen Schnittspalt zu erzeugen. Ein Abstand **A** einer werkstückseitigen Düsenstirnfläche **8** zur der der Schneidgasdüse 1 zugewandten Werkstückoberfläche **9** beträgt im gezeigten Beispiel mindestens 2 mm, bevorzugt mindestens 3 mm, insbesondere mindestens 5 mm. Eine Fokusposition **F** in Strahlrichtung 6 des Laserstrahls 3 befindet sich innerhalb der Dicke D des Werkstücks 2, genauer gesagt in der unteren, weiter von der Schneidgasdüse 1 entfernten Hälfte des Werkstücks 2. Mit anderen Worten befindet sich die Fokusposition F des Laserstrahls 3 in Strahlrichtung 6 in dem Werkstück 2 in einer Tiefe, die größer ist als die Hälfte D/2 der Dicke D des Werkstücks 2. Ein Fokusdurchmesser d_{F} an der Fokusposition F im Werkstück 2 beträgt dabei zwischen 150 µm und 300 µm, bevorzugt ungefähr 200 µm.

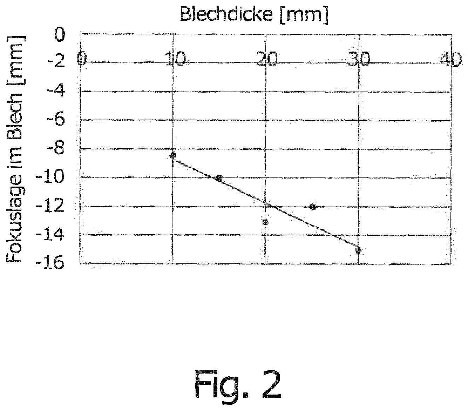

In Figur 2 ist in einem Graphen die Fokuslage im Werkstück 2 (Blech) in Millimetern über der Werkstückdicke (Blechdicke) in Millimetern aufgetragen. Zu erkennen ist, dass die Fokusposition F desto tiefer im Werkstück 2 liegt, je dicker das Werkstück 2 ist. Je größer die Werkstückdicke D ist, desto größer ist also der Abstand zwischen der Fokusposition F und der Werkstückoberfläche 9.

Figur 3 zeigt eine zum Durchführen des weiter oben beschriebenen Brennschneidverfahrens geeignete Laserschneidmaschine **20.**

Die Laserschneidmaschine 20 weist einen Festkörperlaser oder einen Diodenlaser als Laserstrahlerzeuger **21** auf. Die Laserschneidmaschine 20 weist weiter einen verfahrbaren (Laser-)Schneidkopf **22** und eine Werkstückauflage **23** auf, auf der das Werkstück 2 angeordnet ist. Im Laserstrahlerzeuger 21 wird der Laserstrahl 3 erzeugt, der mittels einer Lichtleitfaser (nicht gezeigt) vom Laserstrahlerzeuger 21 zum Schneidkopf 22 geführt wird. Bei der Lichtleitfaser handelt es sich im gezeigten Beispiel um eine Einfachkernfaser, d.h. die Lichtleitfaser weist nur einen Kern auf, in dem der Laserstrahl 3 bzw. die Laserstrahlung des Laserstrahlerzeugers 21 propagiert. Die Einfachkernfaser weist im gezeigten Beispiel einen Kerndurchmesser auf, der zwischen 50 µm und 150 µm liegt. Alternativ kann zur Führung des Laserstrahls 3 vom Laserstrahlerzeuger 21 zum Schneidkopf 22 auch eine Mehrfachkernfaser verwendet werden.

Der Laserstrahl 3 wird mittels einer im Schneidkopf 22 angeordneten Fokussieroptik auf das Werkstück 2 gerichtet. Der Laserstrahl 3, der aus der Einfachkernfaser austritt, weist ein gaußförmiges Intensitätsprofil auf und behält dieses bei der Fokussierung auf das Werkstück 2 bei, d.h. der Laserstrahl 3 weist an der Werkstückoberfläche 9 ebenfalls ein gaußförmiges Intensitätsprofil auf.

Die Laserschneidmaschine 20 wird darüber hinaus mit Schneidgas **24,** hier als Beispiel gezeigt Sauerstoff oder Stickstoff, versorgt. Für die Durchführung des oben beschriebenen Brennschneidverfahrens wird der Schneidgasdüse 1 des Schneidkopfs 22 Sauerstoff als Schneidgas 24 zugeführt, und zwar bei einem Überdruck von ca. 0,4-1,0 bar vor dem Austritt des Schneidgases 24 aus der Schneidgasdüse 1.

Die Laserschneidmaschine 20 umfasst ferner eine Maschinensteuerung **25,** die programmiert ist, den Schneidkopf 22 samt seiner Schneidgasdüse 1 entsprechend einer Schneidkontur relativ zum ruhenden Werkstück 2 zu verfahren. Die Maschinensteuerung 25 steuert auch die Leistung des Laserstrahlerzeugers 21, die beim weiter oben beschriebenen Brennschneidprozess bei mehr als 10 kW liegt und die ggf. bei bis zu 20 kW oder darüber liegen kann. Auf diese Weise kann beispielsweise bei einer Werkstückdicke von 15 mm eine Schneidgeschwindigkeit (Vorschub) von 3,1 m/min und bei einer Werkstückdicke von 25 mm eine Schneidgeschwindigkeit von 1,75 m/min erreicht werden, wobei die Schneidgeschwindigkeit mit zunehmender Laserleistung steigt.

### Bezugszeichenliste

- 1: Schneidgasdüse
- 2: Werkstück
- 3: Laserstrahl
- 5: Düsenöffnung
- 6: Strahlrichtung des Laserstrahls
- 7: Schneidrichtung
- 8: Düsenstirnfläche
- 9: Werkstückoberfläche
- 20: Laserschneidmaschine
- 21: Laserstrahlerzeuger
- 22: Schneidkopf
- 23: Werkstückauflage
- 24: Schneidgas
- 25: Maschinensteuerung
- F: Fokusposition
- D: Werkstückdicke
- A: Abstand
- d_{F}: Durchmesser Laserstrahl

## Patentansprüche

1. Verfahren zum Brennschneiden eines insbesondere plattenförmigen Werkstücks (2) mit einer Dicke (D) von mindestens 10 mm mittels eines Laserstrahls (3) mit einer Leistung von mehr als 10 kW und mit Sauerstoff als Schneidgas (24),
wobei der Laserstrahl (3) gemeinsam mit dem Schneidgas (24) aus einer Düsenöffnung (5) einer Schneidgasdüse (1) austritt,
**dadurch gekennzeichnet,**
**dass** ein Abstand (A) einer werkstückseitigen Düsenstirnfläche (8) von der Werkstückoberfläche (9) mindestens 2 mm, vorzugsweise mindestens 3 mm, besonders bevorzugt mindestens 5 mm beträgt, und
**dass** eine Fokusposition (F) in Strahlrichtung (6) des Laserstrahls (3) sich in dem Werkstück (2) in einer Tiefe befindet, die größer ist als die Hälfte (D/2) der Dicke (D) des Werkstücks (2).

2. Verfahren nach Anspruch 1, **dadurch gekennzeichnet, dass** der Laserstrahl (3) in einem Laserstrahlerzeuger (21) erzeugt wird, der über eine Lichtleitfaser mit einem Schneidkopf (22) verbunden ist, an dem die Schneidgasdüse (1) angebracht ist, wobei die Lichtleitfaser als Einfachkernfaser oder als Mehrfachkernfaser ausgebildet ist.

3. Verfahren nach Anspruch 2, **dadurch gekennzeichnet, dass** die Einfachkernfaser einen Kerndurchmesser zwischen 50 µm und 150 µm aufweist.

4. Verfahren nach einem der vorhergehenden Ansprüche, **dadurch gekennzeichnet, dass** der Laserstrahl (3) an der Werkstückoberfläche (9) ein gaußförmiges Intensitätsprofil aufweist.

5. Verfahren nach einem der vorhergehenden Ansprüche, **dadurch gekennzeichnet, dass** ein Fokusdurchmesser (d_{F}) des Laserstrahls (3) an der Fokusposition (F) zwischen 150 µm und 300 µm, bevorzugt 200 µm, beträgt.

6. Verfahren nach einem der vorhergehenden Ansprüche, **dadurch gekennzeichnet, dass** der Laserstrahl (3) mittels eines Festkörperlasers oder mittels eines Diodenlasers als Laserstrahlerzeuger (21) erzeugt wird.

7. Verfahren nach einem der vorhergehenden Ansprüche, **dadurch gekennzeichnet, dass** der Überdruck des Schneidgases (24) vor dem Austritt aus der Schneidgasdüse (1) zwischen 0,4 bar und 1 bar beträgt.

8. Laserschneidmaschine (20) zum Schneiden eines Werkstücks (2), die Laserschneidmaschine (20) umfassend:
Einen Festkörperlaser oder einen Diodenlaser als Laserstrahlerzeuger (21); Einen verfahrbaren Schneidkopf (22) mit einer Fokussieroptik;
Eine Lichtleitfaser in Form einer Einfachkernfaser oder einer Mehrfachkernfaser, mittels der ein Laserstrahl (3) von dem Laserstrahlerzeuger (21) zum Schneidkopf (22) führbar ist;
Eine Werkstückauflage (23), auf der das Werkstück (2) anordenbar ist;
Wobei Der Laserstrahl (3) mittels der Fokussieroptik gemeinsam mit Sauerstoff als Schneidgas (24) über eine Schneidgasdüse (1) des Schneidkopfes (22) auf das Werkstück (2) richtbar ist; und
Eine Maschinensteuerung (25), die programmiert ist, den Schneidkopf (22) samt seiner Schneidgasdüse (1) entsprechend einer Schneidkontur relativ zu dem Werkstück (2) zu verfahren, und die Leistung des Laserstrahlerzeugers (21) zu steuern,
**dadurch gekennzeichnet,**
**dass** die Laserschneidmaschine (20) mit der Maschinensteuerung (25) zur Durchführung des Verfahrens nach einem der Ansprüche 1 bis 7 eingerichtet ist.

## Claims

1. A method for flame-cutting a workpiece (2), in particular a planar workpiece, having a thickness (D) of at least 10 mm using a laser beam (3) having a power of more than 10 kW and using oxygen as a cutting gas (24),
wherein the laser beam (3) exits, together with the cutting gas (24), a nozzle opening (5) of a cutting-gas nozzle (1),
**characterized in that** a distance (A) of a workpiece-side nozzle end face (8) from the workpiece surface (9) is at least 2 mm, preferably at least 3 mm, more preferably at least 5 mm, and
**in that** a focus position (F) in the beam direction (6) of the laser beam (3) is located in the workpiece (2) at a depth that is greater than half (D/2) of the thickness (D) of the workpiece (2).

2. The method according to Claim 1, **characterized in that** the laser beam (3) is generated in a laser beam generator (21) connected via an optical fiber to a cutting head (22) to which the cutting gas nozzle (1) is attached, wherein the optical fiber is designed as a single-core fiber or as a multi-core fiber.

3. The method according to Claim 2, **characterized in that** the single-core fiber has a core diameter of between 50 µm and 150 µm.

4. The method according to one of the preceding claims, **characterized in that** the laser beam (3) has a Gaussian intensity profile on the workpiece surface (9).

5. The method according to one of the preceding claims, **characterized in that** a focus diameter (d_{F}) of the laser beam (3) is between 150 µm and 300 µm, preferably 200 µm, at the focus position (F).

6. The method according to one of the preceding claims, **characterized in that** the laser beam (3) is generated using a solid-state laser or using a diode laser as the laser beam generator (21).

7. The method according to one of the preceding claims, **characterized in that** the overpressure of the cutting gas (24) is between 0.4 bar and 1 bar prior to the gas exiting the cutting gas nozzle (1).

8. A laser cutting machine (20) for cutting a workpiece (2), the laser cutting machine (20) comprising:
a solid-state laser or a diode laser as a laser beam generator (21);
a movable cutting head (22) having a focusing lens;
an optical fiber in the form of a single-core fiber or a multi-core fiber for guiding a laser beam (3) from the laser beam generator (21) to the cutting head (22);
a workpiece support (23) on which the workpiece (2) can be arranged;
wherein the laser beam (3) can be directed by the focusing lens to the workpiece (2), along with oxygen as the cutting gas (24) via a cutting gas nozzle (1) of the cutting head (22); and
a machine controller (25) programmed to move the cutting head (22) and the cutting gas nozzle (1) thereof according to a cutting contour relative to the workpiece (2) and to control the power of the laser beam generator (21),
**characterized in that** the laser cutting machine (20), together with the machine controller (25), is adapted to carry out the method according to one of claims 1 to 7.

## Revendications

1. Procédé d'oxycoupage d'une pièce (2), en particulier en forme de plaque, d'une épaisseur (E) d'au moins 10 mm au moyen d'un faisceau laser (3) d'une puissance supérieure à 10 kW et avec de l'oxygène comme gaz de coupe (24),
le faisceau laser (3) sortant conjointement avec le gaz de coupe (24) d'une ouverture de buse (5) d'une buse de gaz de coupe (1),
**caractérisé en ce qu'**une distance (D) entre une surface frontale de buse (8) côté pièce et la surface de la pièce (9) est d'au moins 2 mm, de préférence au moins 3 mm, idéalement au moins 5 mm, et
**en ce qu'**une position focale (F) dans la direction (6) du faisceau laser (3) se trouve dans la pièce (2) à une profondeur qui est supérieure à la moitié (E/2) de l'épaisseur (E) de la pièce (2).

2. Procédé selon la revendication 1, **caractérisé en ce que** le faisceau laser (3) est généré dans un générateur de faisceau laser (21) qui est relié par une fibre optique à une tête de coupe (22) sur laquelle est montée la buse de gaz de coupe (1), la fibre optique étant conçue comme une fibre à âme simple ou comme une fibre à âme multiple.

3. Procédé selon la revendication 2, **caractérisé en ce que** la fibre à âme simple présente un diamètre d'âme compris entre 50 µm et 150 µm.

4. Procédé selon l'une des revendications précédentes, **caractérisé en ce que** le faisceau laser (3) présente un profil d'intensité gaussien à la surface (9) de la pièce.

5. Procédé selon l'une des revendications précédentes, **caractérisé en ce qu'**un diamètre focal (d_{F}) du faisceau laser (3) à la position focale (F) est compris entre 150 µm et 300 µm, de préférence 200 µm.

6. Procédé selon l'une des revendications précédentes, **caractérisé en ce que** le faisceau laser (3) est généré au moyen d'un laser à l'état solide ou au moyen d'un laser à diode comme générateur de faisceau laser (21).

7. Procédé selon l'une des revendications précédentes, **caractérisé en ce que** la surpression du gaz de coupe (24) avant la sortie de la buse de gaz de coupe (1) est comprise entre 0,4 bar et 1 bar.

8. Machine de découpe laser (20) pour découper une pièce (2), la machine de découpe laser (20) comprenant :
un laser à l'état solide ou un laser à diode comme générateur de faisceau laser (21) ;
une tête de coupe mobile (22) avec une optique de focalisation ;
une fibre optique sous la forme d'une fibre à âme simple ou d'une fibre à âme multiple, au moyen de laquelle un faisceau laser (3) peut être guidé du générateur de faisceau laser (21) vers la tête de coupe (22) ;
un support de pièce (23) sur lequel la pièce (2) peut être disposée ;
le faisceau laser (3) pouvant être dirigé sur la pièce (2) au moyen de l'optique de focalisation conjointement avec de l'oxygène en tant que gaz de coupe (24) via une buse de gaz de coupe (1) de la tête de coupe (22) ; et
une commande de machine (25) programmée pour déplacer la tête de coupe (22), y compris sa buse de gaz de coupe (1), selon un contour de coupe par rapport à la pièce (2), et pour commander la puissance du générateur de faisceau laser (21),
**caractérisée en ce que** la machine de découpe laser (20) avec la commande de machine (25) est agencée pour la mise en oeuvre du procédé selon l'une des revendications 1 à 7.
